# EUROPEAN PATENT APPLICATION

(11) **EP 4 029 843 A1**
(43) Date of publication of application: **20.07.2022**
(21) Application number: 21152354.3
(22) Date of filing: 19.01.2021
(51) Int. Cl.: C04B 12/00, C04B 28/00, C04B 28/26, B33Y 70/00, B33Y 80/00

(54) **SUSTAINABLE GOODS**

(71) Applicant: Agemos AG, 6330 Cham (CH)
(72) Inventor: EHSAEI, Mohammad Hossein, 64293 Darmstadt (DE); SPANGENBERG, Bernd, 77654 Offenburg (DE); FUTTERKNECHT, Sidon, 6330 Cham (CH)
(74) Representative: Fabry, Bernd

(57) **Abstract**

Suggested are sustainable goods and with improved eco-balance obtained according to the following steps:
(i) providing an inorganic pre-polymer mixture comprising, consisting of or essentially consisting of:
(a) about 2.5 to about 12.5 wt.-percent water glass (calculated as solid);
(b) about 0.7 to about 7.0 wt.-percent alkali hydroxide;
(c) about 10 to about 70 wt.-percent calcium aluminate; and
(d) about 6.8 to about 20 wt.-percent water,
with the proviso that the amounts add up to 100% by weight;
(ii) providing at least one solid additive;
(iii) blending the inorganic pre-polymer mixture of step (i) with the at least one solid additive of step (ii) to form a composite;
(iv) optionally subjecting the composite of step (iiii) to a curing operation; and
(v) shaping the composite of step (iii) or the cured composite of step (iv) into form to obtain the final good.

## Description

### AREA OF INVENTION

The present invention refers to the area of inorganic polymers and relates to sustainable goods e.g. for and everyday items and a method for manufacturing these goods.

### BACKGROUND OF THE INVENTION

The materials most commonly used in construction and to manufacture everyday items include metal, plastics, concrete and ceramics. All of these materials are synthetic in nature, meaning that their production requires energy and generates and/or emits carbon dioxide, which clearly runs against the drive to achieve demanding but necessary climate and CO2 emission reduction targets and to save energy. In addition, products made of concrete or ceramics in particular have a short life span because they are susceptible to environmental influences, such as water, wind and pollutions. From an environmental point of view, on the other hand, it would be desirable if these materials could be replaced by substances that have equivalent or better or increased application properties but would be more ecologically acceptable and, above all, significantly more durable.

On the other hand, products made from wood, as a renewable resource from nature, require protection against fouling, flammability and insects. For the protection of fouling typically products like CCA (Copper Chromium Arsenate), petrochemical tars or halogenated systems are used. For fire retardancy and insect repellency same and/or similar halogenated systems are used. From an environmental, ecotoxic and manufacturing process point-of-view, solutions are required based on less harsh/harmful chemistries, which do not require and additional treatment step like painting and or injection.

### RELEVANT PRIOR ART

WO 1997 006120 A1 (ALPHA BREVET) discloses a process for rapid curing of lightweight concrete with aggregates, e.g. EPS, polystyrene, expanded clay, pumice or the like, wherein a curing liquid consisting of water glass or mixtures of water glass and water is applied to or introduced into the lightweight concrete layer.

From WO 2003078349 A1 (CHEMICKO) a geopolymeric binder based on fly ash is known, which is intended for the production of slurries, mortars and concretes or for waste fixation, and which contains 70 to 94 wt% of power plant fly ash with measuring surface of 150-600 m2/kg and 5 to 15 wt% of an alkaline activator, wherein the activator consists of a mixture of alkaline hydroxide and alkaline silicate, for example water glass, and wherein this activator contains 5 to 15% by weight of Me₂O and has a ratio of SiO₂/Me₂O in the range of 0.6 to 1.5, where Me is Na or K.

EP 0641748 B1 (SCHANZE) relates to a compound for fixing dowels, threaded rods and the like in cavities, in particular boreholes, in concrete, stone and brick masonry, based on water glass, with at least one fine-grained, highly active reactant, such as SiO2 and/or Al₂O₃, in particular from waste materials, as well as with fillers, such as quartz powder and/or quartz sand, characterized in that in that the water glass, in particular potassium water glass, has a molar ratio of SiO₂ to alkali oxide of greater than 1.4, preferably 1.45 - 1.60, but in any case less than 2, and in that the composition furthermore contains, based on 100 parts by weight of water glass, 10 to 40, preferably 20 to 30, parts by weight of a compound which neutralizes the alkali of the water glass by splitting off an acid which is stronger than silica, as a hardener.

### OBJECT OF THE INVENTION

Therefore, it has been the object of the present invention providing a new material for construction and every-day use products which are eco-friendly, particularly with respect to their CO₂ footprint, lower water utilization, and more sustainable characteristics. That are saving, protecting and transforming resources. And as well increase performance in terms of being flame-retardant, insect repellent, and resistant against acids, chlorine, are shrink-free and inert against environmental exposures, particularly with regard to fouling. All these properties can be summarized under the term "positive eco-balance". Finally, the material should also be easy to produce at low cost and to shape into a wide variety of forms without problems: so that it can be used universally in numerous, even very different, fields.

### BRIEF DESCRIPTION OF THE INVENTION

The present invention relates to sustainable goods with improved eco-balance obtained according to the following steps:
(i) providing an inorganic pre-polymer mixture comprising, consisting of or essentially consisting of:
   (a) about 2.5 to about 12.5 wt.-percent water glass (calculated as solid);
   (b) about 0.7 to about 7.0 wt.-percent alkali hydroxide;
   (c) about 10 to about 70 wt.-percent calcium aluminate; and
   (d) about 6.8 to about 20 wt.-percent water,
      with the proviso that the amounts add up to 100% by weight;
(ii) providing at least one solid additive;
(iii) blending the inorganic pre-polymer mixture of step (i) with the at least one solid additive of step (ii) to form a composite;
(iv) optionally subjecting the composite of step (iiii) to a curing operation; and
(v) shaping the composite of step (iii) or the cured composite of step (iv) into form to obtain the final goods.

The invention also encompasses a method for manufacturing said sustainable goods with improved eco-balance comprising, consisting of or essentially consisting of the following steps:
(i) providing an inorganic pre-polymer mixture comprising, consisting of or essentially consisting of:
   (a) about 2.5 to about 12.5 wt.-percent water glass (calculated as solid);
   (b) about 0.7 to about 7.0 wt.-percent alkali hydroxide;
   (c) about 10 to about 70 wt.-percent calcium aluminate; and
   (d) about 6.8 to about 20 wt.-percent water,
      with the proviso that the amounts add up to 100% by weight;
(ii) providing at least one solid additive;
(iii) blending the inorganic pre-polymer mixture of step (i) with the at least one solid additive of step (ii) to form a composite;
(iv) optionally subjecting the composite of step (iiii) to a curing operation; and
(v) shaping the composite of step (iii) or the cured composite of step (iv) into form to obtain the final good.

Surprisingly it has been observed that composites obtained from specific inorganic polymers and additives represent ideal materials for the manufacture of numerous rather different products while matching with all the ecologic conditions mentioned above: these materials are easy to prepare, resistant against environmental influences such as wind, climate, pollution, acids fire and rain. The Ecomposites represent low-cost products in terms of starting materials, by also using residues, waste materials and so far technically unusable raw materials. And they are easy to produce at low energy levels, with low water consumption and with almost no carbon dioxide emissions. Therefore, in the further context of the application these products are referred to as "Ecomposites".

### Inorganic pre-polymers and polymers

Once said inorganic pre-polymer mixture is blended with the additive, the inorganic starting materials start forming a geopolymer. During the reaction, negatively charged aluminum tetrahedra react - activated by OH-groups - with charge-neutral silicon tetrahedra, the negative charge of the Al tetrahedra being balanced by Ca²⁺ ions from the calcium aluminate.

After the components have reacted, the resulting inorganic polymer can be identified by ²⁷Al MAS-NMR spectroscopy and thus distinguished from the starting materials and conventional geopolymers etc. There are numerous references in the literature on the interpretation of such ²⁷Al spectra, e.g. by C. Gervais, K. J. D. MacKenzie, M. E. Smith, "Multiple magnetic field 27AL solid state NMR study of the calcium aluminates CaAl4O7 and CaAl22O19" in Magn. Reson. Chem. 2001, 39, 23-28; by K. J. D. MacKenzie, I. W. M. Brown, R. H. Meinhold, "Outstanding Problems in the Kaolinite-Mullite Reaction Sequence Investigated by 29Si and 27Al Solid-state Nuclear Magnetic Resonance: I, Metakaolinite," J. Am.Ceram. Soc. 68, (1985), 293-297, and by P. S. Singh, M. Trigg, I. Burgar, T. Bastow, "Geopolymer formation processes at room temperature studied by 29Si and 27Al MAS-NMR," Materials Science and Engineering A 396 (2005) 392-402.

It must be emphasized that the reaction here is a covalent bond formation between Al and Si tetrahedra and not a hydration reaction. Pure calcium aluminate shows a sharp signal in the ²⁷Al-MAS NMR spectrum at 78 ppm assigned to negatively charged Al tetrahedra and a broader signal at 12 ppm assigned to six-coordinated Al atoms. When calcined calcium aluminate is mixed with water, it hardens in the course of a hydration reaction. In this process, the tetrahedral signal of the aluminum completely disappears at 78 ppm, because four fold coordinated aluminum completely converts to six fold coordinated aluminum. Therefore, the signal at 12 ppm increases by the proportion that the signal at 78 ppm decreases. In the presence of an excess of water, the signal disappears completely at 78 ppm.

The present case however is different. Although water is added, almost all the aluminum remains fourfold coordinated. It does not react off in the form of hydration to six fold coordinated aluminum. Thus, the reaction is identifiable both by the retention of part of the 78 ppm signal and by the new formation of defined Al-O-Si bonds, which can be seen in the ²⁷Al MAS NMR at 65 ppm (more precisely, between 59 and 65 ppm, depending on the number of Al atoms involved). Also, the new bond can be seen in the IR spectrum around 950 cm⁻¹. Characteristically, the ²⁷Al MAS NMR signal of the inserted aluminum tetrahedra at 78 ppm (exactly: 77.7 ppm) is in conjunction with the signal between 59 and 65 ppm. The spectral ratio clearly identifies the new binder. The ratio of the area values of the signal at 65 ppm (the actual bonding signal from -O-Si-O-Al-O bonds) to the signal at 78 ppm (the signal from the -O-Al-O- bonds) runs from 0 (only -O-Al-O bonds in the calcium aluminate) to over 10. The value is limited in the upper range by the detection of the signal at 78 ppm for Si/AI ratios close to 1. Here the signal at 78 ppm will be very small, possibly close to zero, since the whole calcium aluminate i/AI ratio of will have almost completely reacted off. Here, one can set a baseline signal-to-noise ratio to a signal at 78 ppm of about 3 as the detection limit.

The IR spectrum of the solid material of the invention preferably shows a characteristic band around 950 to 910 cm⁻¹. Conventional geopolymers oscillate here at somewhat higher wavenumbers of 950 to 1,000 cm⁻¹. Also to be observed in the IR spectrums are two characteristic shifts of the water bands to about 1390 cm⁻¹ and to a signal between 2800 and 3000 cm⁻¹.

The inorganic pre-polymer mixtures have the following preferred compositions:
(a) water glass: about 2.5 to about 12.5 wt.-percent, preferably about 5.0 to about 10.0 wt.-percent (calculated as a solid);
(b) alkali hydroxide: about 0.7 to about 7.0 wt.-percent, preferably about 1.0 to about 5.0 wt. -percent;
(c) water: about 6.8 to about 20 wt.-percent, preferably about 10.0 to about 15 wt.-percent;
(d) calcium aluminate: from about 10 to about 70 wt.-percent, preferably from about 20 to about 50 wt.-percent, and more preferably from about 30 to about 40 wt.-percent
with the proviso that the amounts add up to 100% by weight.

The solid material formed exhibits unusually high compressive and flexural tensile strengths and temperature resistance. For the sake of good order, it should be noted that preparations which add up to less or more than 100.0 wt.-percent are not encompassed by the invention and its claims, and a person skilled in the art is always able to select preparations according to the invention on the basis of the present technical teachings. Compared to conventional geopolymers, which contain no alkali ions but a high proportion of calcium and silicon, the present material has a molar ratio of alkali ions (usually Na⁺ and/or K⁺) to calcium of about 1:1 to about 1:5 and in particular about 1:2.

### Components of the inorganic pre-polymer mixture

As far as the inorganic geopolymer is concerned, which is formed during the blending of the constituents, the ratio of Si tetrahedra and Al tetrahedra is freely adjustable in a Si/Al range from 1/12 to 1/1. The preselected Si/Al-ratio determines the amount of Ca-aluminate to be used (as Al-tetrahedral source), and the amount of water glass to be used (as Si-tetrahedral source). The desired compressive and flexural strengths (and indirectly the curing time) are set via this Si/Al ratio. The highest compressive strength is achieved at a Si/Al- ratio of 1/8.

The upper limit of possible mixtures is calculated for a commercial sodium silicate with a modulus value of s = 4 (and thus with a Si/Na+ ratio of 2:1) to give an Si/Al ratio of 2:1. Such a mixture, consisting of pure sodium silicate and calcium aluminate, will not react because the free base for activation (e.g. NaOH) is missing. Therefore, mixtures are not reactive until the ratio of Si/Al ≈ 1. The upper limit of the alkali content is set by its viscosity (as an aqueous solution). Solutions of the alkali in water glass with an alkali ion content of more than 1.5, based on the alkali ion content of the water glass, can no longer be mixed with solid calcium aluminate because of their high viscosity. The lower limit of feasible mixtures is at a ratio of about Si/Al ≈ 1:8. Higher calcium aluminate amounts (for ratios between 1/8 and 1/12) can be homogeneously mixed with the (undiluted) water glass only with the addition of water. However, this causes the unwanted competitive reaction of hydration of the calcium aluminate, which leads to less stable products. Therefore, ratios only make sense from a ratio of Si/Al ≈ 0.125 (i.e., 1/8).

For the purposes of the present invention, so-called silicon nanoparticles can also be considered as water glasses or Si tetrahedral sources. SiO₂ nanoparticles (such as Köstrosol 1540) also react with calcium aluminate instead of water glass. 10 g of Köstrosol mixed with 3 g of NaOH and 20 g of calcium aluminate becomes solid within 3 min.

From the experimental tests and the given stoichiometry, the following three preferred mixtures (in %) are derived, which mark out the range limits of possible reaction mixtures:

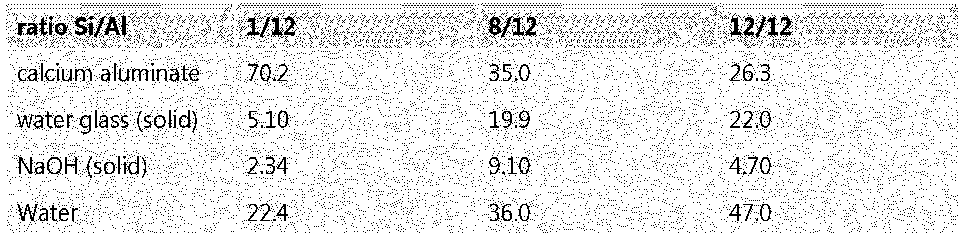

For KOH and potassium silicate, the values for caustic soda and water glass are at most a factor of 54/40 = 1.35 above those of sodium hydroxide solution and sodium silicate. The inert content can be increased up to 80 %. The percentage ratios listed above thus drop to a maximum of 1/5 of the above values. Thus the calcium aluminate content of no mixture falls below the value of 5.26 %.

The amount of OH-ions used determines the reaction rate, as does the amount of Al tetrahedra. If a high concentration of OH-ions is used, the mixture reacts faster than when a lower concentration of OH-ions is used. A high concentration of Al tetrahedra has the same effect as a high OH-ion concentration. In general, therefore, the more aluminum tetrahedra and the more NaOH in the mixture, the faster the binder cures. The curing times can be freely adjusted between a few minutes (for a Si/Al ratio of 1:12) and several hours (for a Si/Al ≈ 1).

It has been found advantageous to maintain the following two conditions individually or together:
- the ratio of calcium ions (of the calcium aluminate) to alkali ions (from water glass and from activation by NaOH) should be 1:2 (or greater);
- the Al⁻ /Na⁺ ratio should be at least 1:1, but can also be greater than 1 (which allows calcium aluminate excess).

The calcium aluminates used generally consist of 29 wt.-percent CaO and 71 wt.-percent Al₂O₃, corresponding approximately to a 3:1 mixture of CA and CA2, which thus has the molecular formula (CaO)₄(Al₂O₃)₅ (C₄A₅) with a molar mass of 734. The reactive aluminates absorb the following maximum amounts of water:

CaO - Al₂O₃ - 10 H₂O, (CA - 10 H2O)

CaO - 2Al₂O₃ - 8 H2O, (CA2- 8 H2O)

Basically, one mole of (CaO)₄(Al₂O₃)₅ can therefore absorb 38 moles of water, but only 8 + 7 = 15 water molecules per mole of C4A5 bind stable. It can however be shown by experiments that almost exactly 10 moles of water are bound per 1 mole of calcium aluminate (C4A5). This suggests that exactly one water molecule per Al center is needed in the final product for charge stabilization. This is less water incorporation than in a simple hydration of C₄A₅.

It must be emphasized that the reaction here is a covalent bond formation between Al and Si tetrahedra, not a hydration reaction in which a solid structure is formed with crystal formation. Consequently there is no need for subjecting the calcium aluminate to an energy and emissions intensive calcination process, only Al tetrahedra with the counter-ion calcium have to be present. Thus, the calcium aluminate to be reacted off can also be prepared from sodium aluminate and CaCl₂ or CaSO₄ wet-chemically at room temperature.

One or more water glasses are used to prepare the inorganic polymer. Water glasses are usually made of sand and Na or K carbonate. They consist of silicates which are readily soluble in water and whose negative charge is compensated by monovalent counter cations (M⁺).

In addition to purely inorganic water glasses, water glasses containing an organic residue, such as a propyl residue (e.g., Protectosil WS808 from Evonik), can also be used; these can be used alone or mixed with purely inorganic water glasses. When using such water glasses with organic residue, it is possible to produce water-repellent surfaces.

It is possible to use a sodium water glass or a mixture of different sodium water glasses. Also, a potassium water glass or a mixture of different potassium water glasses may be employed. According to another embodiment, a mixture of sodium and potassium water glasses, such as 90:10 to 10:90 mixtures can be employed.

Water glasses are characterized by their so-called "s-values", which indicate the mass ratio SiO₂/M₂O (M = alkali metal); the smaller the s-value, the more alkali metals are present. Water glasses with different s-values are commercially available. The s-value of a water glass determines in which chemical constitution the silicate is present. With an s-value of s = 1, the silicate has a negative charge on average. Theoretically, the s-value can drop to 0.25.

Water glasses with s-values up to about 8 are known. For example, water glasses with an s-value of 0.4-5 are used for the present invention. Aqueous solutions of water glasses are viscous. Soda water glasses generally result in a higher viscosity than potash water glasses for the same SiO₂ content (s-value). For the preparation of the inorganic polymer according to the invention, commercial water glass solutions with a solids content of about 22 to about 52 wt% can be assumed, for example.

The second essential component for preparing the material of the invention is an alkali hydroxide, preferably NaOH and/or KOH. Commercially available alkali hydroxides can be used without purification.

Another essential starting material is calcium aluminate; for example, a commercially available calcium aluminate such as Secar^{®} 71 from the company Kerneos Inc. or one from the company Almatis GmbH such as CA-14 or CA-270 can be used.

Another preferred embodiment is to use mixtures of calcium aluminate and sodium aluminate. Among the most important sodium aluminates are mixed oxides of sodium and aluminum NaₓAl_{y}O_{z}, which are also called anhydrous aluminates and are solids, and the mixed hydroxides, e.g. NaAl(OH)₄, which may also occur in aqueous solution. The sodium meta-aluminate (NaAlO₂) preferred in the present invention is a white, water-soluble salt with a melting point of 1800 °C and a molar mass of 81.97. It is often used as a construction chemical (rapid hardener for concrete) and for the production of paints and soaps. Sodium aluminate solutions are of great technical importance. They are formed as an intermediate product in bauxite digestion using the Bayer process and as aluminate liquor in the pickling of metallic aluminum in anodizing plants. Commercially available sodium aluminate solutions are water clear and contain 6-10% dissolved aluminum and approx. 20% NaOH. Ecomposites in which the polymer component contains mixtures of calcium and sodium aluminate cure very quickly, which makes them particularly interesting for 3D printing. Calcium aluminate and sodium aluminate can be used in weight ratios of about 90:10 to about 10:90, preferably about 25:75 to about 75:25, and more preferably about 40:60 to about 60:40. The disclosure of the present invention, in particular preferred mixtures and mixing ratios as well as preferred applications apply in the same way to the calcium aluminate/sodium aluminate mixtures, so that there is no need to repeat them. This also applies in particular to the composition of the pre-polymers.

Furthermore, water is required, whereby no distilled or deionized water is necessary (but can be used), but tap water or even sea water can be used, since the reaction for the production is alkali-tolerant. Particularly in cases where said Ecomposites contain desert sand as a solid component, the use of seawater is recommended to conserve the already limited water resources in these regions.

### Solid additives

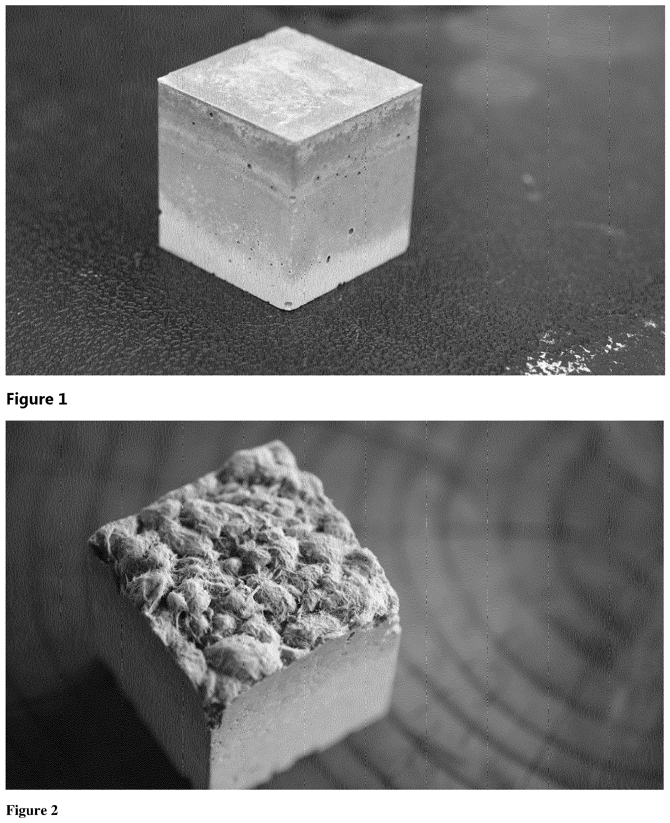

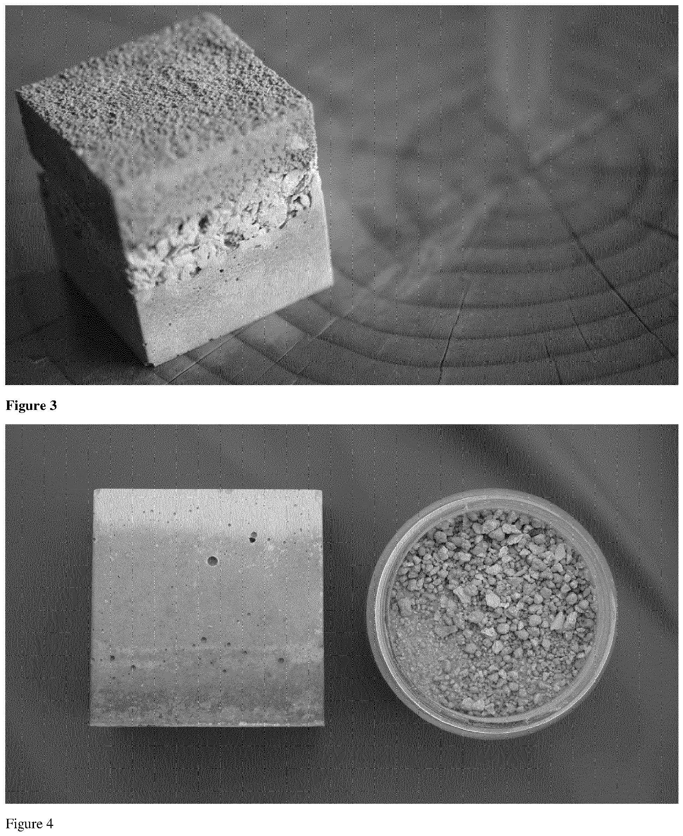

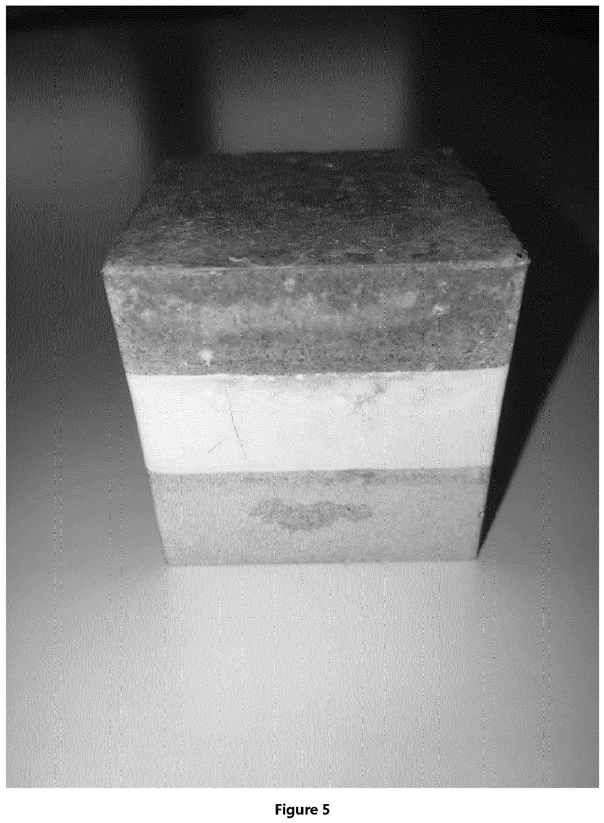

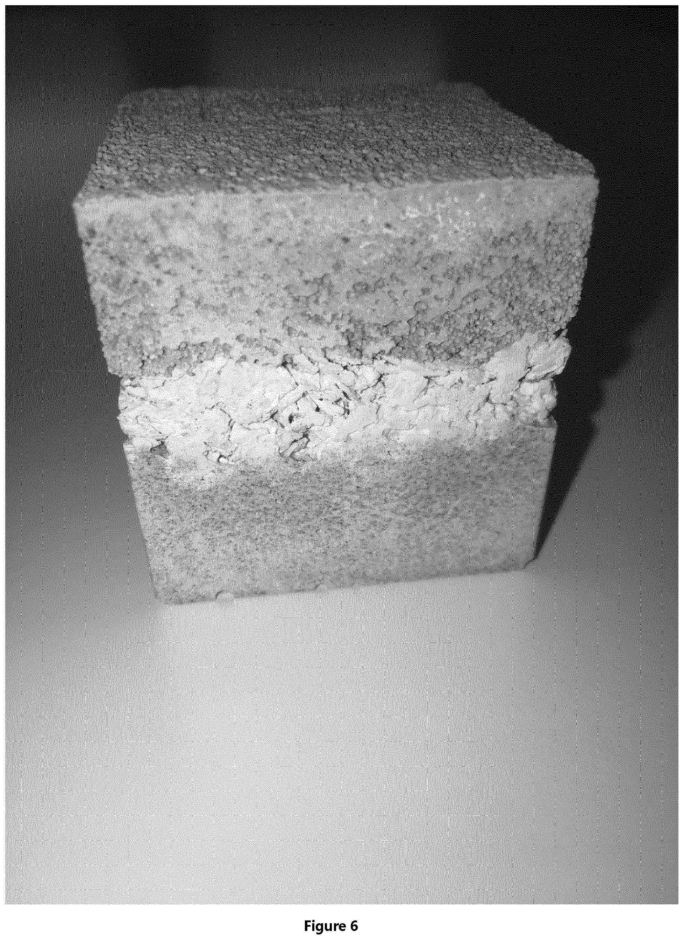

In a first embodiment said solid additives, representing the other part of the composite, preferably encompass natural waste materials and low-value couple products from industry, which can be selected from the group consisting of
- desert sand;
- weathering sand or sandstone;
- brick recycling;
- concrete recycling;
- barium sulfate;
- silicon carbide;
- rubber granulate;
- topsoil;
- rock granulate, such as for example granite powder, granite granulate);
- expanded glass, such as for example LIAVER or PORAVER;
- expanded clay;
- coal;
- clay as powder;
- sage flour, for example from hardwood powder;
- wood chips and wood shavings;
- volcanic ash;
- fibrous material such as for example cellulose, wood fiber, glass fiber, carbon fiber, wollastonite, vermiculite, cotton;
- sand, such as for example sea sand, quartz sand, fine sand, ultrafine sand;
- concrete gravel;
- quartz powder;
- kaolin;
- meta-kaolin;
- talc;
- alumina;
- micro-silica;
- glass powder;
- mica;
- fireclay;
- expanded volcanic ash;
- salt;
- titanium dioxide;
and mixtures thereof, hereinafter referred to as "Ecomposite Hybrids". The **Figures 1 to 6** show bricks for construction consisting of Ecomposites and Ecomposite Hybrids base on quartz flower as the solid additive. In detail:
- Figure 1:: Filler is desert sand of 0-2mm grain size
- Figure 2:: Gutex wood fibers
- Figure 3:: Hybrid of: bottom - concrete gravel, middle - wood chips, top - expanded glass Liaver
- Figure 4:: Concrete recycling from 0-4mm grain size
- Figure 5:: Hybrid of: bottom - concrete gravel, middle - aluminum hydroxide, top - brick recycling
- Figure 6:: same composition as for Figure 3

Particularly preferred are sand, coarse gravel, quartz powder, rubber, organic polymers, wood, fibers, fabrics, salts and mixtures thereof. Particularly preferred are sea sand, desert sand or fine sand with an average grain diameter of ≤ 150 µm.

In another preferred embodiment said solid additives can be chosen from iron phosphate, calcium phosphate, magnesium phosphate, iron oxides, lead oxides, barium sulfate, magnesium sulfate, calcium sulfate, aluminum oxide, meta-kaolin, kaolin, inorganic pigments, wollastonite, rock wool and their mixtures.

Said inorganic pre-polymer mixture and said solid additives can be blended in ratios by weight of from about 20:80 to about 80:20, preferably from about 30:70 to about 70:30 and most preferred from about 40:60 to 60:40.

In the course of the reaction, the equalizing charge of the negatively charged Al tetrahedra changes from Ca²⁺ to the added alkali ions (e.g. K⁺ or Na⁺). The exchanged calcium ions are completely released as Ca(OH)₂. The precipitation of Ca(OH)₂ is the driving force of the reaction, so calcium aluminate is essential for the reaction. More calcium aluminate can be used than is needed for stoichiometric binding of the Na+ ions by the negatively charged Al tetrahedra. If less calcium aluminate is used, the formed bricks will not remain water-stable.

### Manufacturing of the Ecomposites

As explained above, the manufacturing of the composites is rather simple and involves the following steps:
(i) providing said inorganic pre-polymer mixture
(ii) providing said at least one solid additive;
(iii) blending the inorganic pre-polymer mixture of step (i) with the at least one solid additive of step (ii) to form a composite;
(iv) optionally subjecting the composite of step (iiii) to a curing operation;
to obtain the composite.

Preferably, water glass (or water glass solution), alkali hydroxide and water are first brought into contact and then the calcium aluminate is mixed in. Subsequently, (the) at least one solid additive is mixed in. The addition of heat is not required for the reaction, but may be considered - if necessary - to accelerate curing. It has been found that curing takes place between about -24°C and +50°C and even curing under water is possible. Preferably, curing occurs at temperatures in the range of about 25 to about 40 °C.

The viscosity of the reaction solutions can be adjusted by varying the amounts of the starting materials in a range from 25 to 700 mPa (at 20 °C). The reaction solutions in the lower viscosity range are also suitable for 3D printing. The curing time can be set between 50 sec and 40 min. The curing time can be adjusted, for example, via the amount of water and the calcium aluminate content.

The composite according to the invention can consist of both a medium viscosity liquid (consisting of water glass solution and alkali hydroxide) and a powder (calcium aluminate and optionally additives), mixed e.g. in a ratio of about 1:1 (the liquid component is stable for at least 5 months), as well as from a liquid phase (aqueous alkali hydroxide; stable for a long time) and a highly viscous suspension containing water glass solution, calcium aluminate and possibly additives, (similar to spear, stable for 1 week) e.g. in a ratio of 1:20 to 1:50, whereby the process with liquid phase and highly viscous suspension would be suitable for 3D printing, adhesives and spray mortar. Final hardness is achieved after about 21 days. If fine sands with a grain diameter of < 500 µm are used as additive, it has proven advantageous to first mix the fine sand with water glass and lye and then add the calcium aluminate.

### INDUSTRIAL APPLICATIONS

In particular, the present invention refers to the manufacture of sustainable goods which are preferably chosen from (but not limited to) the group consisting of
- ***WOO* = *goods made from wood,*** such as for example flake boards, wood concrete, fiber concrete slabs, walls for prefabricated houses and wood claddings;
- ***FUR* = *furniture,*** such as for example wood and concrete furniture and kitchen tops.
- ***WAS* = *waste treatment products and disposals,*** such as for example encasements and coatings for waste and contaminated material, including radioactive material.
- ***MED* = *medical devices,*** such as for example surgery tables and surfaces, coatings or floorings for medical devices
- ***3D* = *3D-printing products,*** such as for example printing masses for 3D printers.
- ***TEX* = *textile products,*** such as for example fibers;
- ***CON* = *construction products,*** such as for example sewers, concrete products and additives, railway sleepers, noise insulation products, car parks, tunnel linings, plasters and renderings, separators, cladders, coatings, products for road construction, design concretes, modules, blocks, floor screeds and products for furnace construction.
- ***DIY* = *do-it-yourself products,*** such as for example prefabricated parts for home and garden, spray mortar, fillers for dowels, tiles, ceramics and ceramic hybrids, adhesives, particularly for do-it-yourself.
- ***PA* - *performance applications,*** such as adhesives particularly for electronics, automotive and solar panels, and
- ***MET* = *products for metal production,*** such as for example molds and mold materials for metal production

The following scheme provides an overview of the major advantages technical areas and the specific goods made from the inorganic pre-polymers/solid additive blends:

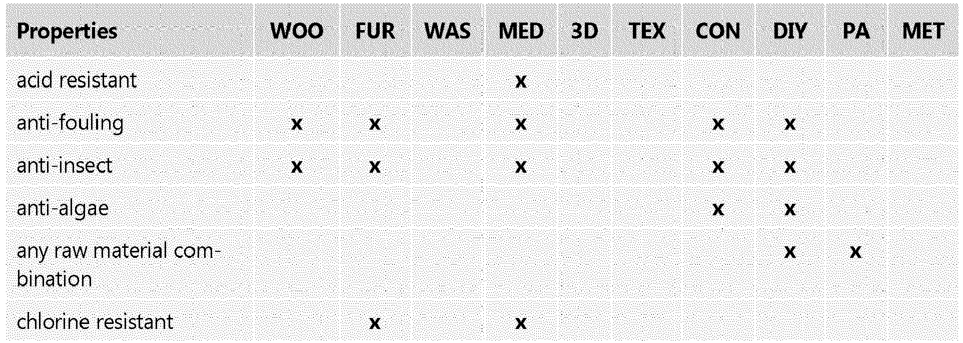

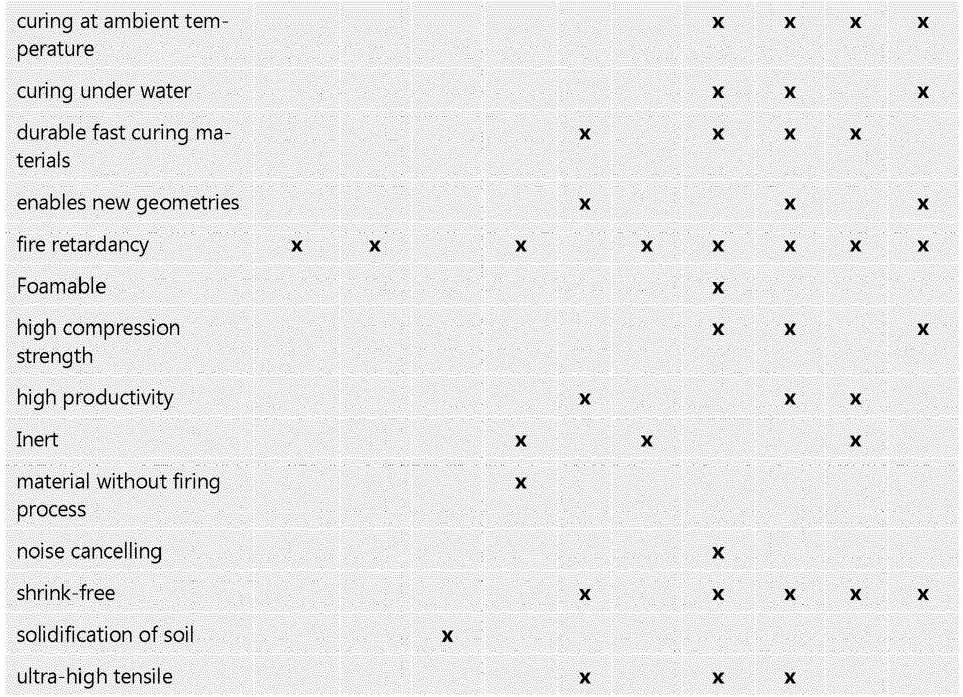

Finally, for the purposes of the invention, it is necessary to bring the composites into the desired shape, if necessary after curing. This is to be understood as meaning that the composites are to be understood as starting materials which are now further processed into the end products, as described above by way of example. The further processing methods are not critical and depend solely on the shape of the desired end product. Typical examples include casting and injection molding, extrusion and molding.

### EXAMPLES

### Overview of materials

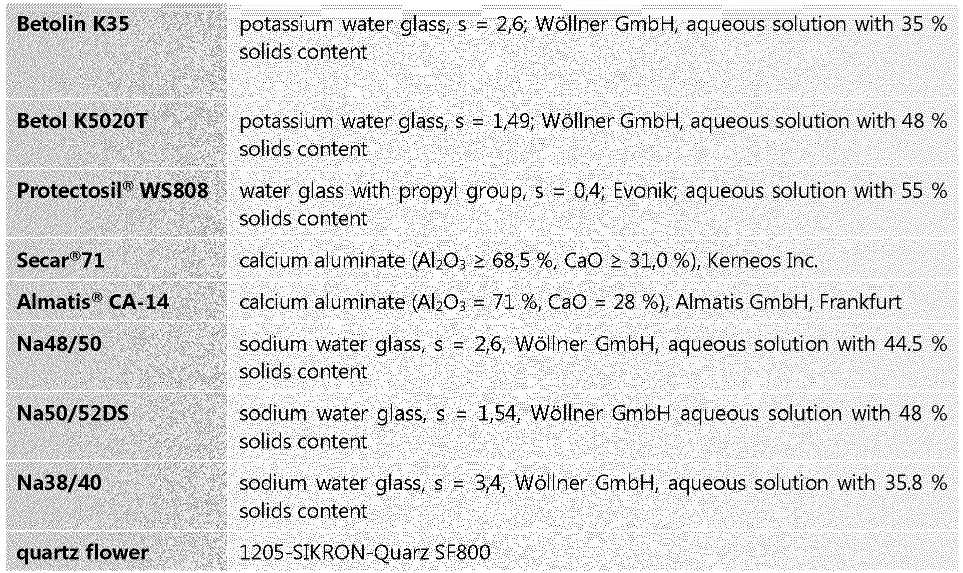

In Examples 5-7, the following water glass-water mixtures were used: WG1: 9.92 g NaOH dissolved in 20 g water mixed with 100.2 g Na38/40 and WG2: 19.98 g NaOH, dissolved in 10 g water, mixed with 100.6 g Na38/40 . The compressive strength of the specimens was measured using a Zwick/Roell Z250 universal testing machine. For this purpose, the compressive forces (in N) were recorded graphically over the deformation distance. The maximum pressure reached was related to the surface area (mm²) of the specimen.

### Example 1

100 g K35, 100 g K5020T, 36 g WS808, 50 g KOH, 64 g water) were mixed with 600 g Secar^{®} 71, 60 g quartz flour and 400 g desert sand. The mixture could be stirred for five minutes and was solid after 20 min.

### Example 2

100 g K35, 100 g K5020T, 36 g WS808, 50 g KOH, 64 g water) were mixed with 600 g Almatis^{®} CA-14, 60 g quartz flour and 380 g barium sulfate. The mixture could be stirred for five minutes and was solid after 20 min.

### Example 3

80 g Na 48/50, 20 g Na50/52DS, 21 g NaOH, 29 g water were mixed with 350 g Secar^{®} 71, 4.3 g KH2PO4 and 400 g kaolin. The mixture could be stirred for five minutes and was solid after 20 min.

### Example 4

80 g Na 48/50, 20 g Na50/52DS, 21 g NaOH, 29 g water were mixed with 350 g Almatis^{®} CA-14, 4.3 g KH2PO4 and 390 g wood fibers. The mixture could be stirred for five minutes and was solid after 20 min.

### Example 5

The concrete substitute was prepared from 40 g Almatis^{®} CA-14, 19.4 g WG1 and 25 g meta-kaolin; the mixture was solid and gray in color after 32 min.

### Example 6

The concrete substitute was prepared from 40 g Almatis^{®} CA-14, 9.48 g WG1 and 25 g rock wool; the mixture was solid after 3-4 min and of white color.

### Example 7

The concrete substitute was prepared from 40 g Almatis^{®} CA-14, 28.86 g WG2 and 25 g quartz flower; the mixture was solid after 20 min and gray in color.

### Examples 8A and B

102 g Na38/40, 10 g NaOH, 50 g water and 925 g coarse gravel were mixed with 165 g Secar^{®} 71 (A) and 165 g Almatis^{®} CA14 (B), respectively. Density: 2.27 g/cm3 (A), compressive strength: 40.9 N/mm2 (A); density and compressive strength for (B) were comparable.

### Examples 9A and B

102 g Na38/40, 10 g NaOH, 18 g water were mixed with 325 g desert sand (120 µm grain size) and 180 g Secar^{®} 71 (A) or 180 g Almatis^{®} CA14 (B). Density: 2.01 g/cm3 (A), compressive strength: 37.5 N/mm2 (A), flexural strength: 7.8 N/mm2 (A); density, compressive strength and flexural strength of (B) were comparable.

### Examples 10a to 10c

### Fast curing

100 g K42 (Betolin K42 from Woellner), 20 g KOH, 50 g water with 55 g water and 420 g calcium aluminate. The mixture is solid after 90 sec, with a compressive strength of 123 N/mm2. 100 g K35 (Betolin K35 from Woellner), 20 g KOH, 50 g water with 55 g water and 425 g calcium aluminate, solid after 8 min, with a compressive strength of 169 N/mm2. Si/AI ratio 0.33: 100 g Na38/40 (Betol 38/40 from Woellner), 10 g NaOH, 10 g water, 250 g calcium aluminate, 125 g desert sand, solid after 12 min, with a compressive strength of 162 N/mm2. Mixtures according to the above examples with fast curing are ideally suited for 3D printing.

### Example 11

6.4 g NaOH + 86 g water glass Na38/40 with 36 g calcium aluminate and 330 g construction sand is solid after 90 min (final hardness: 41 N/mm2). The Si/AI- ratio is 1/1. (Proportionate CO2 emissions, based on concrete: 20 %).

### Example 12

14 g NaOH + 86 g water glass Na38/40 with 50 g calcium aluminate (and 370 g construction sand) is solid after 180 min (final hardness: 30 N/mm2). The Si/AI- ratio is about 3/4 (5.7/8). (Proportionate CO2 emissions, based on concrete: 24 %)

### Example 13

14 g NaOH + 86 g water glass Na38/40 with 50 g water and 35 g calcium aluminate (and 680 g construction sand) is solid after 24 h (final hardness: 11 N/mm2). The Si/AI- ratio is 1/1. (Proportionate CO2 emissions, based on concrete: 11 %).

### Example 14

30 g NaOH + 32 g water glass Na38/40 and 68 g water glass Na48/50 with 70 g water and 370 g calcium aluminate (and 31 g quartz flour) is solid after 12 min (final hardness: 155 N/mm2). The Si/AI- ratio is 1/8. (Proportionate CO2 emissions, based on concrete: 100 %).

### Example 15

92 g sodium aluminate (19% wt), 16.4 g Ca(OH)₂ and 40 g Al(OH)₃*3H₂O were blended to form a first suspension and then mixed with a second suspension consisting of 91 g sodium silicate and 9 g NaOH in a 1:1 weight ratio. The product was hard after 4 minutes.

## Claims

1. Sustainable goods with improved eco-balance obtained according to the following steps:
(i) providing an inorganic pre-polymer mixture comprising, consisting of or essentially consisting of:
(a) about 2.5 to about 12.5 wt.-percent water glass (calculated as solid);
(b) about 0.7 to about 7.0 wt.-percent alkali hydroxide;
(c) about 10 to about 70 wt.-percent calcium aluminate; and
(d) about 6.8 to about 20 wt.-percent water,
with the proviso that the amounts add up to 100% by weight;
(ii) providing at least one solid additive;
(iii) blending the inorganic pre-polymer mixture of step (i) with the at least one solid additive of step (ii) to form a composite;
(iv) optionally subjecting the composite of step (iiii) to a curing operation; and
(v) shaping the composite of step (iii) or the cured composite of step (iv) into form to obtain the final good.

2. A method for the manufacture of sustainable goods with improved eco-balance comprising or consisting of the following steps:
(i) providing an inorganic pre-polymer mixture comprising, consisting of or essentially consisting of:
(a) about 2.5 to about 12.5 wt.-percent water glass (calculated as solid);
(b) about 0.7 to about 7.0 wt.-percent alkali hydroxide;
(c) about 10 to about 70 wt.-percent calcium aluminate; and
(d) about 6.8 to about 20 wt.-percent water,
with the proviso that the amounts add up to 100% by weight;
(ii) providing at least one solid additive;
(iii) blending the inorganic pre-polymer mixture of step (i) with the at least one solid additive of step (ii) to form a composite;
(iv) optionally subjecting the composite of step (iiii) to a curing operation; and
(iv) shaping the composite of step (iii) or the cured composite of step (iv) into form to obtain the final good.

3. The method of Claim 1, wherein said at least one solid additive is selected from the group consisting of sand, coarse gravel, quartz powder, rubber, organic polymers, wood, fibers, fabrics, salts and mixtures thereof.

4. The method of Claim 1, wherein said at least one solid additive is selected from the group consisting of sea sand, desert sand or fine sand with an average grain diameter of ≤ 150 µm.

5. The method of Claim 1, wherein said at least one solid additive is selected from the group consisting of Iron phosphate, calcium phosphate, magnesium phosphate, iron oxides, lead oxides, barium sulfate, magnesium sulfate, calcium sulfate, aluminum oxide, meta-kaolin, kaolin, inorganic pigments, wollastonite, rock wool and their mixtures.

6. The method of Claim 1, wherein said inorganic mixture and said solid additives are blended in ratios by weight of from about 20:80 to about 80:20.

7. The method of Claim 1, wherein said sustainable goods are chosen from the group consisting of goods made from wood, furniture, waste treatment products and disposals, medical devices, 3D-printing products, textile products, construction products, do-it-yourself products, and products for metal production.

8. The method of Claim 7, wherein said goods made from wood encompass flake boards, wood concrete, fiber concrete slabs, walls for prefabricated houses and wood claddings.

9. The method of Claim 7, wherein said furniture encompasses wood furniture and kitchen tops.

10. The method of Claim 7, wherein said waste treatment products and disposals encompass encasements and coatings for waste and contaminated material, including radioactive material.

11. The method of Claim 7, wherein said medical devices encompass surgery tables and surfaces, coatings or floorings for medical devices

12. The method of Claim 7, wherein said 3D-printing products encompass printing masses for 3D printers.

13. The method of Claim 7, wherein said construction products encompass sewers, concrete products and additives, railway sleepers, noise insulation products, car parks, tunnel linings, plasters and renderings, separators, cladders, coatings, products for road construction, design concretes, modules, blocks, floor screeds and products for furnace construction.

14. The method of Claim 7, wherein said do-it-yourself products encompass prefabricated parts for home and garden, spray mortar, tiles, ceramics and ceramic hybrids, adhesives, particularly for electronics, automotive, do-it-yourself and solar panels.

15. The method of Claim 7, wherein said products for metal production represent molds and mold materials for metal production
